# EUROPEAN PATENT APPLICATION

(11) **EP 2 645 207 A1**
(43) Date of publication of application: **02.10.2013**
(21) Application number: 11843078.4
(22) Date of filing: 22.11.2011
(51) Int. Cl.: G06F 3/023, G06F 3/041, H03M 11/04

(54) **INPUT DEVICE AND CONTROL METHOD OF INPUT DEVICE**

(30) Priority: 24.11.2010 JP 2010261060
(71) Applicant: NEC Corporation, Tokyo 108-8001 (JP)
(72) Inventor: OGA, Toshiyuki, Tokyo 108-8001 (JP)
(74) Representative: Vossius & Partner
(86) International application number: PCT/JP2011/077440
(87) International publication number: WO 2012/070682

(57) **Abstract**

It is an input apparatus of an information processing apparatus having a touch sensor, and has a recognition means which detects that the finger that the touch sensor has detected has touched and recognizes the position information of the finger, and a control means which sets a virtual keyboard based on the position information.

## Description

### Technical field

The present invention relates to an input apparatus of an information processing apparatus and its control method, especially relates to an input apparatus using touch sensor and its control method.

### Background art

In an information processing apparatus, a touch sensor is used as an input apparatus, which detects the contact of an object. Some touch sensors can detect the proximity. In addition, a touch panel composed of a touch sensor and a display device is widely used by the reasons that an input operation can be done with visually checking the input position that it can be flexibly changed to set the input position, input method (zero dimension information input such as button which does not include distance information, one-dimension information input such as a slider and two-dimension information input such as handwriting of a character and a figure) because the control can be set by the program of the computer, and that an input operation is easy with indication the information related to the input position and the input method.

On the other hand, the operability of the conventional keyboard which has been used so far has been refined by the long time improvement and there are many users mastering by the operation method. Accordingly, by setting a virtual key board on a touch panel with the combination of those strong points, the operability in accordance with the conventional keyboard is realized.

For example, in the patent document 1 (Japanese Unexamined Patent 2008-508601), it is disclosed, as shown in Fig. 1, to display a virtual keyboard on the touch panel and to key in.

However, the virtual keyboard disclosed by this patent document 1 has several problems.

It is the most serious problem (the first problem) is that the virtual keyboard cannot be operated without visual checking of the indication on the touch panel since the sense of touch cannot be used for grasping the key position.

The virtual keyboard in the patent document I has a configuration to display a virtual keyboard with a predetermined size at a predetermined position by the trigger of finger touching to the touch sensor.

An operator, who watches this display, recognizes the position of the key to be operated first. However, in a small terminal or the like, there may be the condition that the display cannot be visually checked. For example, it is the case that a key is operated keeping the terminal in a pocket. Then, a keyboard, in which each conventional key has been mechanically implemented (conventional keyboard), has enabled to grasp the position of the key to be operated first, through the recognition of the keyboard shape by the sense of touch. However, it is difficult to grasp the key position by the sense of touch in a case of a touch panel.

Even in the case that a plurality of key operations following to the first key operation, the visual check for the positions of the plurality of keys to be operated is needed in a touch panel. The scheane that is realized in a conventional keyboard and can be used, such as checking the position of the key to be operated subsequently by using the sense of touch similar to the first key operation, and making it easy for an operator to grasp the relative position relation between the keyboard and the operator hand by setting a home position key whose sense of touch is made different from other key, cannot be used.

In case of a conventional keyboard, by changing the key shape such as making the key top concave, it has been enabled to detect the depressing point of the key, for example whether the center of the key has been pressed, using the sense of touch when the operator has depressed , and to correct the depressing point the next time and the after time if it has been judged to have the gap from the center. However, this correction is impossible in a virtual keyboard.

Next, the second problem is that a virtual keyboard cannot be installed in the position that cannot be visually recognized by an operator of a terminal.

A virtual keyboard premises that it is visually recognized by the user as already stated. On the other hand, when a display device is allocated on a surface facing an operator of a terminal case, there is a case that the keyboard is wished to be allocated on the back surface of a terminal case in consideration of the visibility of the display device. When a virtual keyboard using a touch sensor is used in this case, the method is needed for recognizing the key position and the depressing point of the key on a virtual keyboard without depending on the sense of sight of the operator.

The third problem is the point that, in the case of a small size keyboard such as a numerical keypad, it can not be displayed at the optional position based on an operator will since the position is fixed in spite that there exists a wide area on a touch panel where the keyboard can be displayed. In the case of the patent document 1, a keyboard is displayed at the predetermined position by finger touching to a touch sensor, and it cannot be displayed at the optional position, which the operator desires, on the touch panel.

In order to settle such problem, the present invention is proposed, and the aim is to offer an input apparatus with the excellent operability of the keyboard constituted on the touch sensor.

### Disclosure of invention

An input apparatus of an information processing apparatus, which has a touch sensor, of the present invention has a recognition means which detects that a detection object, which the touch sensor has detected, has touched and recognizes the position information of the detection object and a control means which sets a virtual keyboard to the position based on the position information.

### BRIEF DESCRIPTION OF THE DRAWINGS

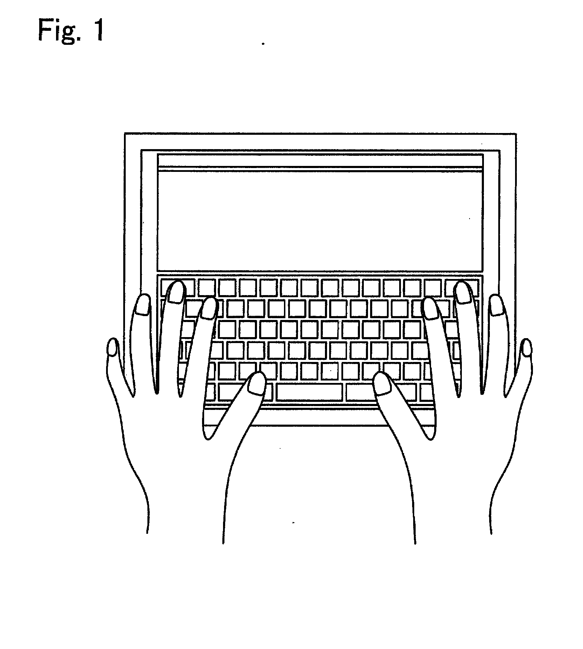

Fig. 1 is a figure which shows that a virtual keyboard is displayed and the key input is done on the touch panel indicated in the patent document 1.
Fig. 2 is a block diagram of an input apparatus according to the present invention.
Fig. 3 is a figure which illustrates the first embodiment of the present invention.
Fig. 4 is a figure which illustrates the embodiment operation of the present invention.
Fig. 5 is a figure which illustrates the second embodiment of the present invention.
Fig. 6 is a figure which illustrates the third embodiment of the present invention.
Fig. 7 is a figure which illustrates the embodiment operation of the present invention.
Fig. 8 is a figure which illustrates the embodiment of the present invention.
Fig. 9 is a figure which illustrates the embodiment operation of the present invention.
Fig. 10 is a figure which illustrates the embodiment operation of the present invention.
Fig. 11 is a figure which illustrates the embodiment operation of the present invention.
Fig. 12 is a figure which illustrates the embodiment operation of the present invention.
Fig. 13 is a figure which illustrates the embodiment operation of the present invention.
Fig. 14 is a figure which illustrates the embodiment operation of the present invention.
Fig. 15 is a figure which illustrates the embodiment operation of the present invention.
Fig. 16 is a figure which illustrates the embodiment operation of the present invention.

### The best embodiment for implementing the invention or the embodiment for implementing the invention

### (The first embodiment)

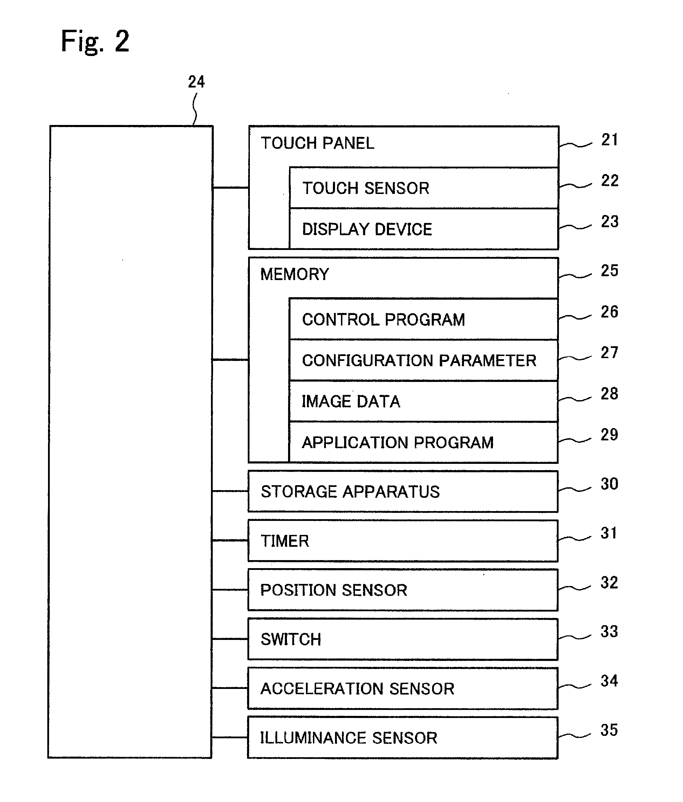

An input apparatus as the first embodiment of the present invention will be described using Figs. 2 to 4.

As shown in a block diagram of Fig. 2, a touch panel 21 includes a touch sensor 22 and a display device 23. The touch sensor 22 outputs a touch signal based on touching (event of contact or proximity of objects such as a human fingertip and a stylus) and inputs to a processor 24. The touch signal includes two-dimensional coordinate information on the touch sensor 22 which has been related to the position on the space which the contact or the proximity of a human body and an object has taken place. In the case of contact, although the two-dimensional coordinate information of the point which is contacted on the touch sensor 22 is generally outputted as a touch signal, it may be the two-dimensional coordinate information which has added the gap (offset) of predetermined distance and the direction. In the case of proximity, the two-dimensional coordinate information on the point (for example, the intersection point of a perpendicular line taken down from the object to the two-dimensional coordinate plane on the touch sensor 22 and the two-dimensional coordinate plane), which is closest on the touch sensor 22 to an proximity object, is generally outputted as a touch signal. In the same way as the contact case, an offset may be added to the two-dimensional coordinate information. The two-dimensional coordinate information which is included in the touch signal and outputted is made the position information.

The detection (sampling) of the touch signal in the touch sensor 22 is repeatedly executed in a predetermined time interval, and the touch signal is obtained as a discrete time series value concerning to the discrete sampling time as a result. By narrowing the time interval of the touch signal detection, the time corresponding to the touch signal, which shows that a touch has been detected, can be approximately handled as the time information (time information) of the touch occurrence. The touch signal will include this time information.

The touch sensor 22 outputs a signal that indicates the non-detection of the touch in the state that the touch is not detected (touch non-detection state). When it moves from the touch non-detection state to the state that the touch is detected (touch detection state), the first touch signal is made the touch start signal and the position information and the time information that are included there are made the touch start position information and the touch start time information respectively. When it moves from the touch detection state to the touch non-detection state, the last touch signal is made the touch end signal and the position information, and the time information are made the touch end position information and the touch end time information respectively,

The display device 23 input a display signal outputted from the processor 24.

A memory 25 has a control program 26, a configuration parameter 27, image data 28 and an application program 29 as the stored information, inputs the stored information from the processor 24 and outputs the stored information to a processor 24.

A storage apparatus 30 has the memory information, inputs the memory information from the processor 24 and outputs the memory information to the processor 24. A memory card and a hard disk are used in order to store the large volume information which the memory 25 cannot store generally. There may be a case of interconnection via a network (not shown).

A timer 31 inputs a setup signal and a trigger signal from the processor 24 and outputs a time count signal and an interrupt signal to the processor 24,

A position sensor 32 outputs a position signal to the processor 24.

The processor 24 inputs a touch signal from the couch sensor 22, outputs a display signal to the display device 23, inputs the stored information from the memory 25 and outputs the stored information to the memory 25. The memory information is inputted from the storage apparatus 30, and the memory information is outputted to the storage apparatus 30. The time counting signal and the interrupt signal are inputted from a timer 31, the setup signal and the trigger signal are outputted to the timer 31, and the position signal is inputted from the position sensor 32.

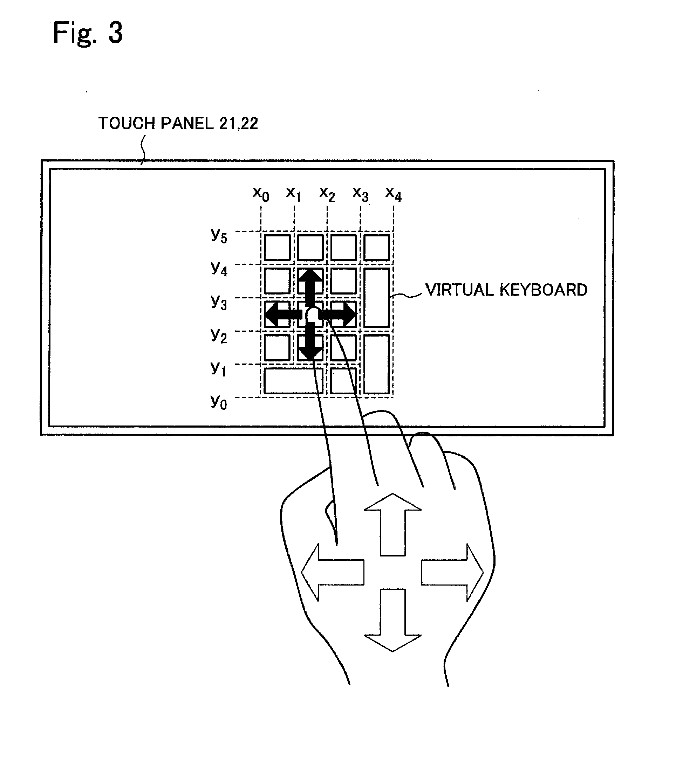

Next, the operation of the input apparatus will be described using Fig. 3.

In the first embodiment, in the condition that a virtual key arrangement cannot be visually checked on the touch sensor 22, the key input operation becomes possible by the similar operating to the conventional blind touch from the second touch.

As shown in Fig. 3, the virtual keyboard is built on the touch sensor 22. In the virtual keyboard, the detection face which detects a touch of the touch sensor 22 is divided into a plurality of key areas as indicated with a broken line. In this example, it is in a division arrangement which has the same shape as the key arrangement of the conventional keyboard. The touch to each key area is regarded to be equivalent to the depressing of a key of a conventional keyboard of the position corresponding to each key area, and causes to output a signal which shows that the key has been pushed. Although the convenience of a virtual keyboard improves when the image is displayed as indicated by a solid line, which shows that a virtual key exists for each key area, the image may not be indicated.

As a virtual keyboard, a numerical keypad example will be described in the first embodiment. However, the number, the shape and the arrangement of the keys are not limited to this in the present invention, and when it is a keyboard having a plurality of keys, it can be applied to everything including a keyboard in which the keys has been grouped and arranged for the right hand operation and for left hand operation as well as a keyboard with the usual QWERTY arrangement. A new key arrangement may be defined, of course.

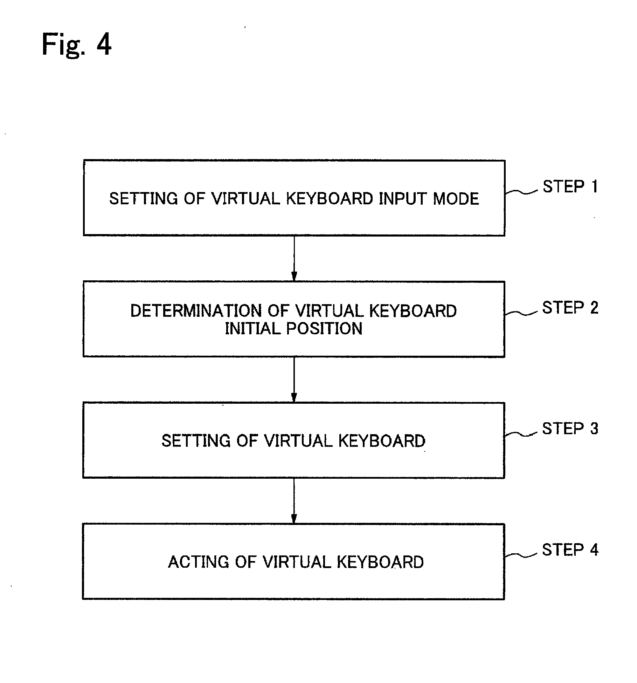

The operation which arranges a virtual keyboard in the optional position on the touch sensor 22 and inputs by operator finger, will be described in detain with reference to Fig. 4, Fig. 10, Fig. 11, Fig. 12 and Fig. 13.

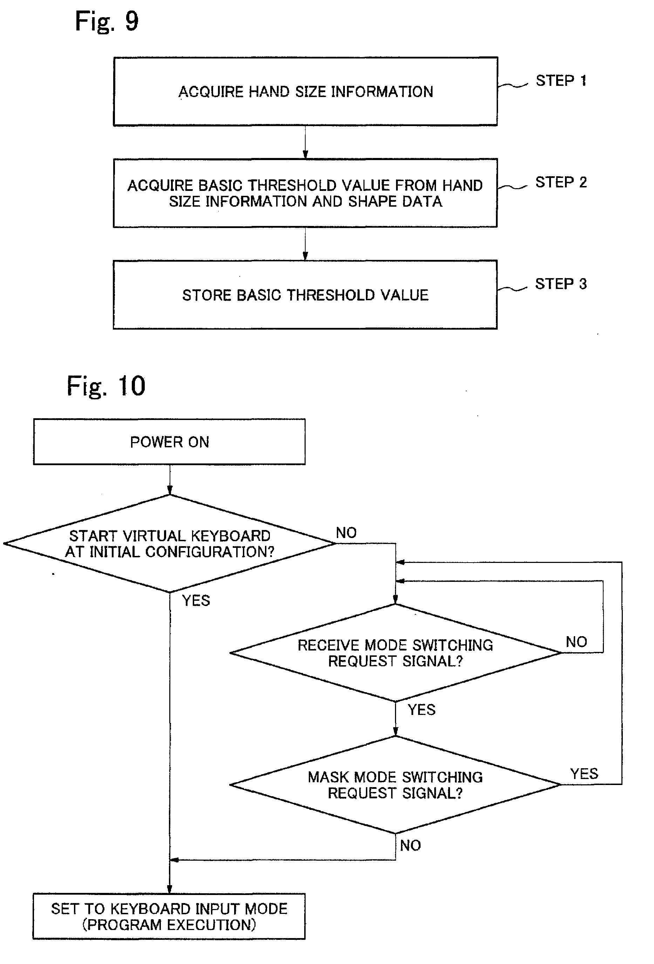

First, the input mode (the virtual keyboard input mode) using the virtual keyboard is set. (Step1 of Fig. 4 and Fig. 10)

As a case that the virtual keyboard input mode is set, there exist the case of setting by the initialization just after the power on and the case of switching by a mode switching request signal from other operation modes including the input mode. Depending on the operation mode, the case is also assumed that the application works which does not relate to the input.

In the case that it is set by the initialization, the processor 23 executes the control program 26, which performs a virtual keyboard input processing, after the initialization. In the case that it is switched from the other operation mode, the processor 24 executes the control program 26 when detecting a mode switching request signal.

The mode switching request si gnal can be generated based on the signals that other sensors and input devices output as well as the case that it is generated when the virtual keyboard input mode is selected by the input from the touch sensor 22.

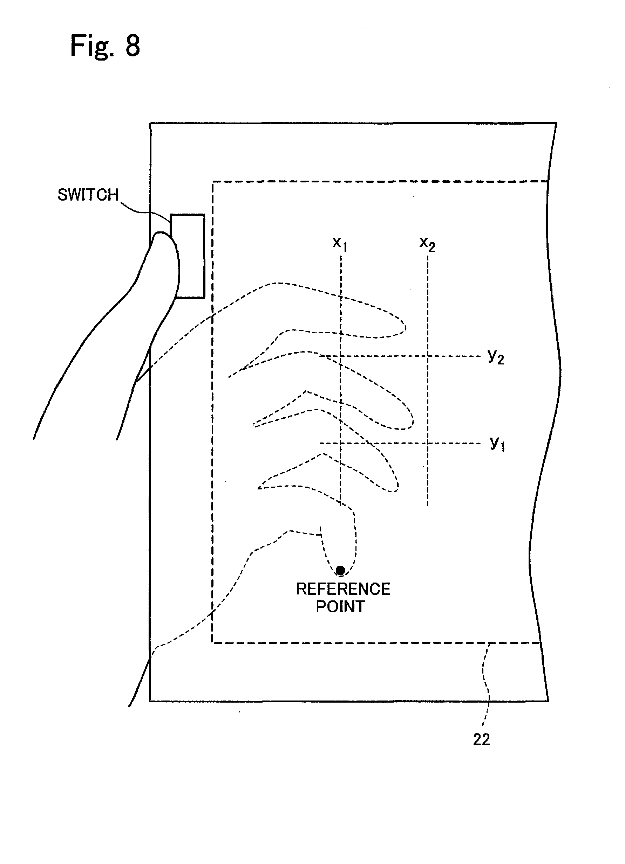

For example, positioning of the operator hand for the touch panel 21 and the touch sensor 22 as well as the mode switching operation is easy when installing the switch 33 (it may be small touch sensor or a key) that can be recognized the position by the sense of touch in a frame potion surrounding the touch panel 21 and the touch sensor 22, a side face and a back face of the terminal (Fig.8) and so on, and setting so as to switch the mode switching request signal by thumb operation, for example.

It is possible to have an acceleration sensor 34 (a vibration sensor and a gravity sensor are also included) and generate a mode switching request signal using the output.

For example, if an operator prefers to arrange the touch panel 21 horizontally and operate it white looking down usually, and if, according to the detection result of the gravity direction, it is judged that the touch panel 21 has the large angle (for example not less than 60 degrees) to the horizontal plane, a high possibility is presumed that the operator operates the terminal without watching the terminal while keeping to put the terminal in a bag or a pocket. And the input mode may be changed based on the possibility. Similarly, it is presumed that the operator operates the virtual keyboard without latching in the case that the touch panel 21 and the touch sensor 22 direct downwards (the touch panel 21 and touch sensor 22 are arranged on the back face of the terminal to the operator who looks down from the top) according to the detection result of the gravity. And it can be set to switch the input mode based on the presumption. Further, the vibration is detected when the operator walks with carrying the terminal in hand or drives a car, and it is presumed that the operator operates it under the condition that he cannot turn his eye to the virtual keyboard or that the visual recognition of the virtual keyboard is difficult for the operator because of the vibration. And it can be set to switch the input mode based on the presumption.

It is possible to generate the mode switching request signal by using the output from an illuminance sensor 35 equipped (a light receiving element of a camera is also included).

When the surrounding is dark such as in a movie theater, it is presumed that the virtual keyboard operation of groping is requested under the condition where the terminal illumination is not available. And it can be set to switch the input mode based on the presumption.

The processor 24 has the function to mask the input of the mode switching request signal and enables the configuration in order to reject the switching of the operation mode in the case that the virtual key board input mode is unnecessary or is prohibited.

When the touch sensor 22 enters in the virtual keyboard input mode, the processor 24 executes the control program 26 and performs the following processing. At this time, the setting information (included in a configuration parameter 27) is transmitted from the memory 25 to the processor 24 and referred. Hereinafter, although the case of the contact is described as a touch, the case of the proximity is the same.

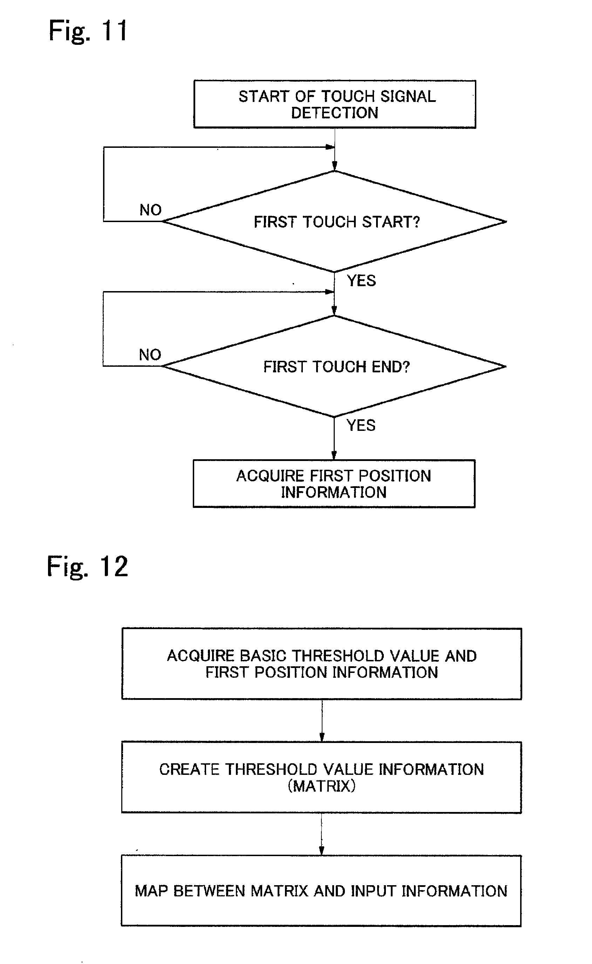

The virtual keyboard initial position decision processing is performed at first. (Step2 of Fig. 4 and Fig. 11)

The processor 24 is waiting for the first touch signal from the touch sensor 22 in the initial state of the virtual keyboard input mode. When the operator finger as a detection target touches the touch sensor 22, the touch sensor 22 detects the contact (touch) of the finger and outputs the first touch signal to the processor 24. The time information on the contact (touch) (the first time information) and the position information on the contact (touch) (the first position information) are included in the first touch signal. While the finger keeps contacting (touching) the touch sensor 22, the touch sensor 22 continues to capture the contact (touch) of the finger and keeps outputting as the first touch signal.

When the touch sensor 22 detects that the operator finger is away from the touch sensor 22, the processor 24 acquires the touch end position information concerning to the first touch signal as the first position information. Further, the first position information is not limited to the touch end position information. For example, although touch starting position information can be used, a case when touch end position information is used will be described here.

A processor 24 carries out virtual keyboard setting processing based on the first position information. (Step 3 of Fig. 4 and Fig. 12)

The processor 24 divides a contact detecting face of the touch sensor 22 into a plurality of areas based on the first position information. For example, when the position is indicated by the XY two-dimensional coordinate system, the threshold values are set up to each of the x-direction and the y-direction, and it is divided into matrix shapes. (As an example, broken lines representing the threshold values of each direction are shown in Fig. 3 in x0-x4, y0-y5.) The basic threshold value is stored in a configuration parameter 27. The information of relative arrangement and size in the matrix is included in the basic threshold value. The processor 24 generates the threshold value information by adding the touch end position information of the first touch signal (the first position information) as an offset to the basic threshold value. Further, the basic threshold value is set based on the assumption that the finger which performs the first touch has been decided in advance. If other finger is used for the first touch, the basic threshold value corresponding to the finger should be selected.

The processor 24 correlates the input information of a virtual keyboard stored in the configuration parameter 27 to each area of the matrix.

As an example of the input information, of a virtual keyboard, a character code of A,B,... and 1,2.... and a control code of a Return key and an Escape key are pick up. These are stored in the configuration parameter 27 with a table format, for example. The information whose order is fixed in advance, such as character codes, may be correlated by calculation. In this case, the information concerning to an operational expression of calculation (the coefficient and the invariable, for example) is stored in the configuration parameter 27.

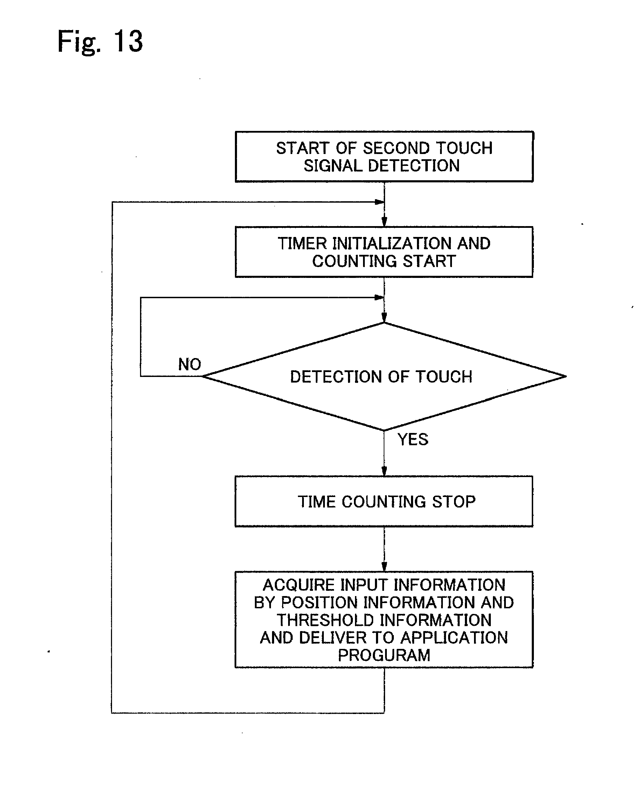

Next, the virtual keyboard operation processing is carried out. (Step4 of Fig. 4 and Fig. 13)

The processor 24 waits for the second touch signal from the touch sensor 22. When the operator finger touches the touch sensor 22 again as the second contact (touch), and the touch sensor 22 outputs the second touch signal to the processor 24, the processor 24 performs the calculation to compare the position information included in the second touch signal with the threshold value information, and detects in which area of said matrix the second contact (touch) has occurred.

And the input information of a virtual keyboard corresponding to the detected area is delivered to the processing of an application program 29 executed as documentary creation, a spread sheet and a game.

The processor 24 repeats the above-mentioned processing, from the state waiting for the second touch signal to the delivery of the input information, during the processing of the virtual keyboard operation.

Further, in the state that the second touch signal or after one is waited for, if the upper limit time which is predetermined has passed without the next touch signal input , the virtual keyboard operation processing is terminated. The information on the upper limit time stored in the configuration parameter 27 is set to a timer 31 by the processor 24. The processor 24 outputs a trigger signal for starting the time count to the timer 31 when it enters the waiting state for the touch signal, and the timer 31 begins to count the time. When counting the time beyond the upper limit time, the timer 31 outputs an interrupt signal to the processor 24, and the processor 24 terminates the virtual keyboard operation processing. When the touch signal is detected before the interrupt signal is received from the timer 31, the processor 24 sends the setup signal to stop the time count to the timer 31, and the timer 31 stops the time counting. And when the input information delivery is completed, it returns in the waiting state for the touch signal again.

According to the description mentioned above, the virtual keyboard to be touched at the second touch and after is constructed (virtual keyboard initial position determination processing, virtual keyboard configuration processing) based on the first touch signal which includes the first position information vindicating the position of the operator hand (here, it means that a plurality of fingers whose relative position relation is predetermined are included as a group). Accordingly, even if a virtual key arrangement cannot be indicated on the touch sensor 22 or the indication cannot be watched, a key input operation is possible by the operation similar to the conventional blind touch on the second touch and after.

As an application, an operational conceptual diagram when a virtual keyboard is built on the terminal back face is shown in Fig. 8. The threshold value information x1, x2, y1 and y2 are set to the touch sensor 22 installed in the terminal back face.

On the other hand, there is a case that it is wanted to change the position of the virtual keyboard on the touch sensor 22 during the virtual keyboard operation. Although it is able to switch into a new mode where the position of the virtual keyboard can be changed or to change by depressing a key for the moving, the operation time for it is needed and there is a defect in the operability. The operator hand (a plurality of fingers whose relative position relation is predetermined are included as a group) may move from the position set initially in the first touch during the virtual keyboard operation.

Accordingly, the first embodiment has the composition that the virtual keyboard position can be changed, according to the movement of the operator hand (a group of fingers) under the operation, with no special operation.

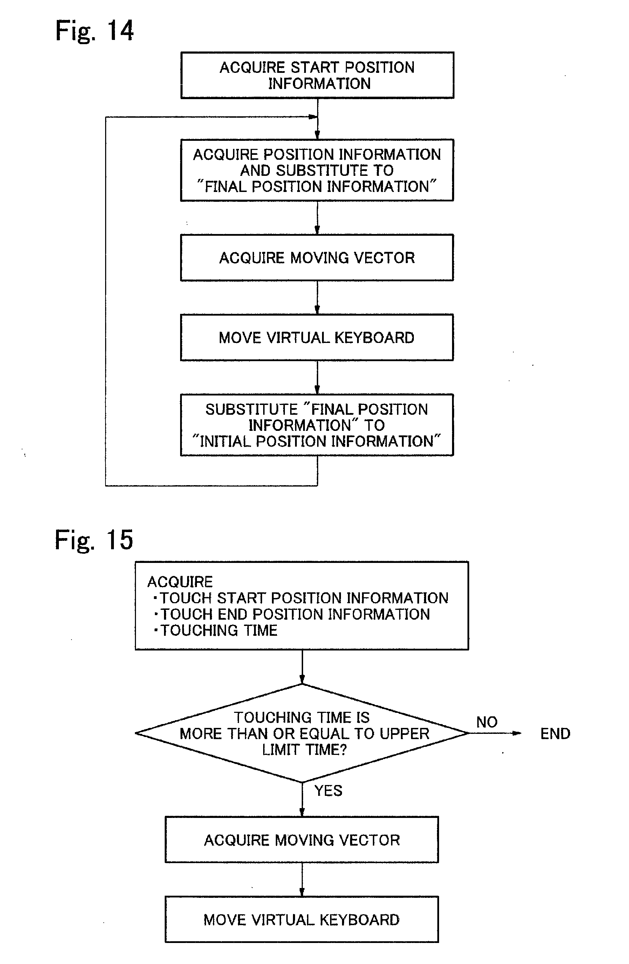

That is, the first virtual keyboard movement processing indicated below is performed. (Fig. 14)

While a finger contacts (touches) the touch sensor 22, the position information of contact (touch) is repeatedly detected in a predetermined time interval and is input to the processor 24 as a discrete time series value. The processor 24 monitors the position information and performs the processing to move the virtual keyboard by the direction and the distance of the movement vector, which is obtained according to the arithmetic operation for the movement vector whose start point is set to be the position information at a certain time and whose end point is set to be the position information at the next detection time, every time interval mentioned above. (The first virtual keyboard movement processing)

In the processing mentioned above, the processor 24 can also performs the processing on the arithmetic operation of the movement vector and after based on the position information which has been thinned out in the predetermined sample interval. In other words, the arithmetic operation frequency of the movement vector can be reduced for the detection frequency of the touch. As a result, the amount of the arithmetic operation can be reduced.

As other methods, the second virtual keyboard movement processing is indicated. (Fig. 15)

The processor 24 monitors the position information. And if the processor 24 judges that the duration of the touch (touch time) is more than or equal to the predetermined upper limit value and the operator finger has moved keeping the contact (touch) on the touch sensor 22, the processor 24 performs the processing to obtain the movement vector whose start point is set to be the touch start position information and whose end point is set to be the touch end position information and to move the virtual keyboard by the direction and the distance of the movement vector.

As the processing to measure the touch time, the processor 24 outputs a trigger signal which directs the start of time counting to the timer 31 when the touch start time information is inputted. If the trigger signal from the processor 24 is inputted, the timer 31 counts the time which is given in advance as the configuration information from the processor 24 and outputs an interrupt signal to the processor 24 when the time has passed. When then interrupt signal is received, the processor 24 sets the internal interruption flag (not shown). (In initialization, an interruption flag is cleared.) After that, when the touch ending time information is inputted, a movement vector, whose start point is set to be the touch start position information and whose end point is set to be the touch end position information, is obtained by calculation. When the size of the movement vector is smaller than a lower limit value set in advance, the processor 24 judges that the same key continues to be depressed. On the other hand, when the size of the movement vector is larger than or equal to said lower limit value ,it is judged to have moved with keeping to contact (touch) and the processing is performed to move the virtual keyboard by the direction and the size (distance) of the movement vector. When the touch ending time information is inputted, the processor 24 clears the interruption flag. Further, if the interruption flag is not set when the touch ending time information is inputted, the processor 24 does not perform the processing of the calculation for the movement vector and after.

According to the first embodiment, a virtual keyboard to be touched from the second touch is constricted based on the position information on the first touch signal (the first position information), as shown above. Accordingly, even in the condition that the virtual key arrangement cannot be watched, a key input operation becomes possible by the similar operation to the conventional blind touch from the second touch.

The keyboard position can be changed without performing the special operation.

Moreover, because the virtual keyboard follows the movement even when the operator hand (a plurality of fingers are included as a group) has moved from the position set initially by the first touch during the virtual keyboard operation, the misoperation occurrence probability of the next touch input can be reduced and the operatability can be improved.

Further, when a touch panel 21 is used with the replacement of the touch sensor 22, the processor 24 can indicate an image, by which an operator can visually distinguish each area of the matrix mentioned above, to a display device 23. In Fig. 3, the case that the shape of the numerical keypad is modeled is indicated. A rectangular image which indicates each key indicates each area. Additionally, a colored tile, a character such as letters and an icon may be used.

### (The second embodiment)

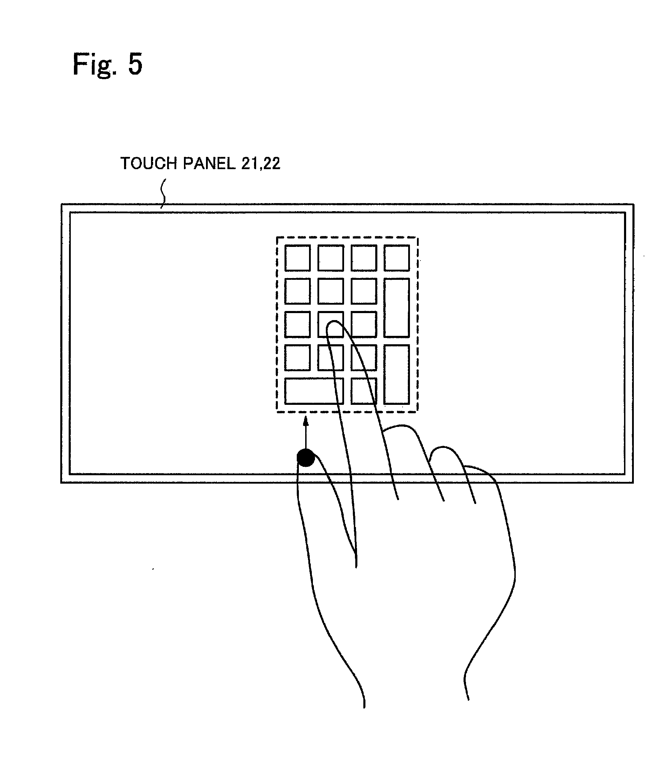

Next, the formation and the operation of the second embodiment of the present invention will be described using Fig. 5.

This embodiment has the characteristics that the virtual keyboard performs the input operation by the second finger with continuously keeping to detect the touch position of the first finger, which is the reference, in order to recognizes the position of the operator hand continuously.

As the formation of the embodiment, an input apparatus is described according to Fig. 5, in which the virtual keyboard is set based on the touch position by the thumb and an input operation of the virtual keyboard is performed by an index finger. With reference to Fig. 4, Fig. 10, Fig. 16, Fig. 12 and Fig. 13, the operation, which arranges the virtual keyboard in the optional position on the touch sensor 22 and performs the input processing by the operator finger, will be described in detail.

In this input apparatus, the virtual keyboard input mode is set by the same procedure as the first embodiment. (Step of Fig. 4 and Fig. 10)

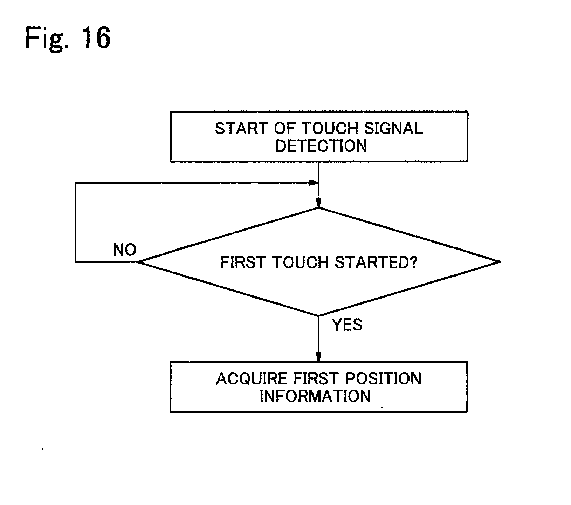

First, the virtual keyboard initial position decision processing is carried out. (Step2 of Fig. 4 and Fig. 16) The operation will be described.

In Fig. 5, the processor 24 is waiting for the first touch signal from the touch sensor 22 in the initial state. When the operator finger touches the touch sensor 22, the touch sensor 22 outputs the first touch signal to the processor 24. The position information (the first position information) and time information (the first time information) on the contact (touch) are included in the first touch signal. These informations are repeatedly detected and updated.

Next, when the first touch signal (by a thumb in Fig. 5) is inputted, the processor 24 carries out the virtual keyboard setting processing based on the first position information. (Step3 of Fig. 4 and Fig. 12) The operation is indicated below.

Further, the following operation described below is terminated when the operator finger, which is an origin of the first touch signal, ends the contact (touch).

The processor 24 divides a contact detecting face of the touch sensor 22 into a plurality of areas based on the position information on the first touch signal (the first position information). For example, when the position is indicated by the XY two-dimensional coordinate system, the threshold values are set up to each of the x-direction and the y-direction, and it is divided into matrix shapes. The basic threshold value is stored in a configuration parameter 27. The information of relative arrangement and size in the matrix is included in the basic threshold value. The processor 24 generates the threshold value information by adding the position information of the first touch signal (the first position information) as an offset to the basic threshold value. The processor 24 correlates the input information of a virtual keyboard stored in the configuration parameter 27 to each area of the matrix. In Fig. 5, a thumb is being used for the generation of the first touch signal. At that time the value in the thumb usage case, is used as the basic threshold value. Further, the finger for the first touch is fixed in advance and the basic threshold value is set with assuming it. When the other fingers are used for the generation of the first touch signal, the basic threshold value depending on the finger is selected.

Next, the virtual keyboard operation processing is carried out. (Step4 of Fig. 4 and Fig. 13)

The processor 24 waits for the second touch signal (by an index finger in Fig. 5), while inputting the first touch signal (by thumb in Fig. 5) from the touch sensor 22. When the operator finger touches the touch sensor 22 as the second contact (touch), and the touch sensor 22 outputs the second touch signal to the processor 24, the processor 24 performs the calculation to compare the position information included in the second touch signal with the threshold value information, and detects in which area of said matrix the second contact (touch) has occurred. And the input information of a virtual keyboard corresponding to the detected area is delivered to the processing of an application program 29 executed as a document creation, a spreadsheet and a same.

While the virtual keyboard operation processing is carried out, the processor 24 repeats the above-mentioned processing, from the state waiting for the second touch signal to the delivery of the input information.

The virtual keyboard operation processing is terminated when the operator finger, which is an origin of the first touch signal, ends the contact (touch). This operation does not depend on the presence of the touch signal on the second touch signal and after.

Further, even in the case of the continuation of the first touch signal, similarly to the first embodiment, the virtual keyboard operation processing is terminated when there is no input of the next touch signal in spite of the condition that the touch of the second touch and after is waited for and the predetermined time has passed.

In order to resume the virtual keyboard initial position decision processing, all of the contacts (touches) are released once.

On the other hand, when the first contact (touch) point has moved with maintaining the contact (touch), the position of the virtual keyboard is updated according to it.

That is, the virtual keyboard movement processing indicated below is performed. (Fig. 14)

During the contact (touch) of a thumb to the touch sensor 22 (touch), the first position information is repeatedly detected in a predetermined time interval and is input to the processor 24 as a discrete time series value. The processor 24 monitors the first position information, obtains the movement vector, whose start point is set to be the first position information at a certain time and whose end point is set to be the first position information at the next detection time, every said time interval by an arithmetic operation, and performs the processing to move the virtual keyboard by the direction and the distance of the movement vector.

### (Virtual keyboard movement processing)

The processor 24 can perform the processing on the arithmetic operation of the movement vector and after based on the first position information that has been thinned out in the predetermined sample interval in the processing mentioned above. In other words, the arithmetic operation frequency of the movement vector can be reduced for the touch detection frequency. As a result, the amount of operations can be reduced.

After the virtual keyboard operation processing or the virtual keyboard movement processing ends, and all of the contacts (touches) are released, the virtual keyboard initial position decision processing restarts when the touch sensor 22 detects that a thumb has contacted (touched) again.

In the description of the second embodiment mentioned above, a case that a thumb is used for the first touch which is a position reference has been indicated. But the other fingers may be used, of course. In the case, the basic threshold value according to the used finger is used.

According to the second embodiment, as shown above, the position of the operator hand is continuously recognized based on the position information (the first position information) on the first touch by the first finger that is the reference. And the virtual keyboard is constructed by applying that the relative position relation is limited between the first linger and a different finger, which shares the same hand with the first finger and is used for the second touch and after. As a result, the input operation can be easily performed even in the condition that the virtual key arrangement cannot be watched.

An operational conceptual diagram in the case that the virtual keyboard is built on the back face of the terminal is shown in Fig. 8 as an application. Here, the case that the finger which performs the first touch as a reference is the little finger is indicated.

In addition, the effect is obtained that the misoperation occurrence probability of the touch input can be reduced and the input operation is improved more since the virtual keyboard follows concerning to the movement of the operator hand that has taken place between touch and touch especially in the case that the hand or finger of the operator has moved on the first contact (touch) and after.

### (The third embodiment)

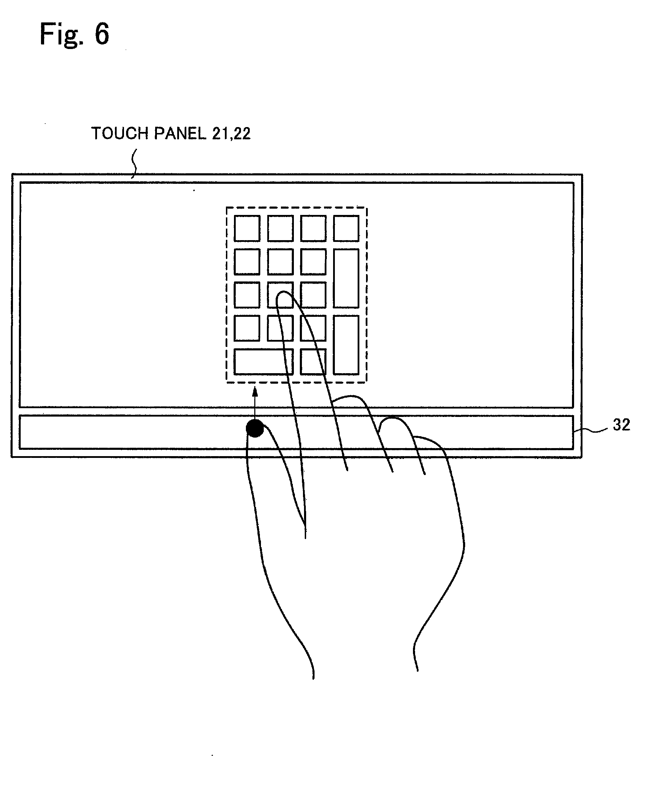

Although the detection of the finger which is the reference is performed by the touch sensor 22 that composes the virtual keyboard in the embodiment mentioned above, it may be detected with the implementation of the second position sensor 32 as shown in Fig. 6 as the third embodiment of the present invention. Although it is arranged in the bottom portion of the frame in Fig. 6, the left portion arrangement is possible for a person of the right hand operation in which the thumb goes out to the left side as shown in Fig. 6 and the right portion arrangement is possible for a person of the left hand operation in which the thumb goes out to the right side. Because the position sensor 32 is smaller compared with the touch sensor 22. the finger position which is the reference is limited in comparison with the second embodiment. Therefore, along with the reduction of the position information amount, the amount of the arithmetic operation by the processor 24 can be reduced. When a touch panel 21 is used in particular, the visibility is improved because a display surface does not have to be covered for the first touch.

In the embodiment described above, the operation for setting a virtual keyboard with the size suitable for each operator (initial calibration) will be described using Fig. 2, Fig. 7 and Fig. 9.

The virtual keyboard with the most suitable key arrangement and size for a user, can be selected and constructed, by inputting the information on the hand size (the positional relationship between the finger and the finger) for each user and registering (storing) the information in the memory 25 and a storage apparatus 30 in the initial calibration.

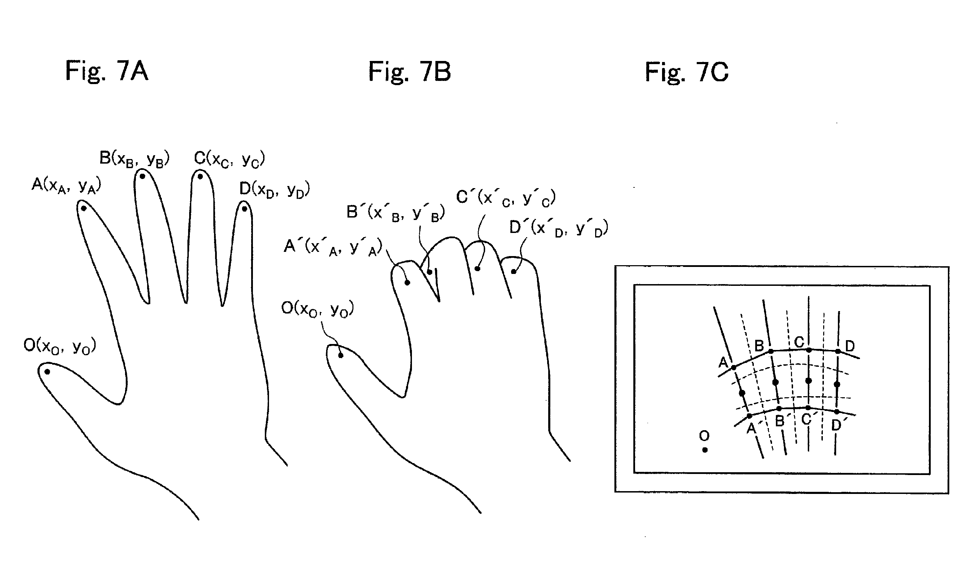

First, on touching the touch sensor 22 by opening a hand and extending a finger as shown in Fig. 7 A, the positions (setting as a point O, a point A, a point B, a point C and a point D concerning to the thumb, the index finger, the middle finger, the ring finger and the little finger respectively), that the tip of the finger touches, are read-out and stored in the memory 25. (Step1 of Fig. 9)

The distances between each of points are obtained from the coordinate of the acquired point O, point A, point B, point C and point D. If it is supposed that the hands of various operators are in a homothetic relation, these correspond to the size of the operator hand. Accordingly, for example, the mean value of each point-to-point distance, and the weighted mean value, that has been weighted depending on the finger to which each point-to-point distance is related, are stored in the parameter 27 as the size information of the hand. The shape data of a standard virtual keyboard such as a numerical keypad and a QWERTY keyboard is registered in the configuration parameter 27. And a basic threshold value of the virtual keyboard which fits to the size of the operator hand, can be calculated by performing the arithmetic operation such as multiplying the shape data by the size information on the hand. (Step2 of Fig. 9). The basic threshold value is stored in the configuration parameter 27. (Step3 of Fig. 9)

Next, a further device is indicated concerning to the shape of the virtual keyboard.

The point O, the point A, the point B, the point C and the point D shown in Fig. 7A mentioned above are read-out and stored in the memory 25. Next, with keeping the thumb position and the bending status and touching the touch sensor 22 by bending the other fingers as shown in Fig. 7B, the positions that the tip of the finger touches (a point A ', a point B', a point C', and a point D' are set respectively concerning to the index finger, the middle finger, the ring finger and the little finger) are read-out and stored in the memory 25. It will be preferable at this time that an arm is parallel to the touch sensor 22, a distal segment of the bent finger (between a fingertip and the first joint) is vertical to the touch sensor 22 and the second joint makes a right angle. (Step 1 of Fig. 9)

An example of these points on the touch sensor 22 is shown in Fig.7 C. At this time, the point A, the point B, the point C and the point D indicate the position of the virtual key, which can be arranged in the farthest position from an operator when the position O of the thumb is made a reference, concerning to the index finger, the middle finger, the ring finger and the little finger respectively. Similarly, the point A ', the point B', the point C' and the point D' indicate the position of the virtual key, which can be arranged in the closest position from an operator when the position O of the thumb is made a reference, concerning to the index finger, the middle finger, the ring finger and the little finger respectively. Accordingly, because the fingertips of the index finger, the middle finger, the ring finger and the little finger can move on a straight line AA ', a straight line BB', a straight line CC' and a straight line DD' respectively, it is desirable that the virtual keys of the virtual keyboard are arranged between the line which ties the point A, the point B, the point C and the point D and the line which ties the point A', the point B', the point C' and the point D'. In particular, it is desirable to be arranged on the straight line AA ', the straight line BB', the straight the line CC' and the straight line DD'. By making the middle (midline, for example) of the neighboring out of the straight line AA ', the straight line BB', the straight line CC' and the straight line DD' a boundary of virtual keys as shown in Fig. 7 C with a broken line, a possibility of the misoperation of the adjacent virtual key can be reduced at the time of the virtual keyboard usage. Similarly, the possibility of the misoperation of the adjacent virtual key can be also reduced, by arranging the virtual keys, which centers are the points which divide each of a segment AA', a segment BB', a segment CC', and a segment DD' in equal intervals in the near-to-far direction to an operator.

### (Division of an area)

The information on the positions and the boundaries of these virtual keys is obtained by the arithmetic operation based on the coordinates of the point A, the point B, the point C, the point D, the point A', the point B', the point C' and the point D' which are stored in memory 25, (Step 2 of Fig. 9) and is stored as the basic threshold value in a configuration parameter 27. (Step 3 of Fig.9)

The mentioned above has been described based on the second embodiment, in which the position O of the thumb is a reference, but can be also utilized the first embodiment.

For example, it has been predetermined that the first touch is carried out by "the extended eniddle finger". And when the first touch signal is detected, it is supposed that the position information corresponds to the point B and the virtual keyboard is set. (In this case, the position information when bending and extending is also acquired in advance concerning to a thumb.)

In addition, as a modification of the first embodiment, if it has been predetermined that the first touch is performed with "an extended middle finger", the second touch is done with "an extended thumb" and the virtual keyboard input is carried out after the third touch, a gap in the rotation direction, whose center is made by the first touch (middle finger), can be corrected.

### The industrial availability

The present invention relates to an input apparatus using a touch sensor and its control method.

### A description of codes

- 21: Touch panel.
- 22: Touch sensor.
- 23: Display device.
- 24: Processor.
- 25: Memory.
- 26: Control program.
- 27: Configuration parameter.
- 28: Image data.
- 29: Application program.
- 30: Memory storage.
- 31: Timer.
- 32: Position sensor.
- 33: Switch.
- 34: Acceleration sensor.
- 35: Illuminance sensor.

## Claims

1. An input apparatus which is an input apparatus having a touch sensor, comprising:
a recognition means which detects a touch of the detection object detected by said touch sensor and recognizes a position information of said detection object; and
a control means which sets a virtual keyboard at the position based on said position information.

2. The input apparatus according to claim 1 comprising:
the recognition means which recognizes the position of said detection object just before the touch ends as said position information; and
the control means which sets said virtual keyboard in said touch sensor.

3. The input apparatus according to claim 1 comprising:
the recognition means which recognizes the position of the updated touch as said position information while a touch of said detection object continues; and
the control means which sets said virtual keyboard to said touch sensor.

4. The input apparatus according to claim 1 comprising:
a second touch sensor;
the recognition means which recognizes the position of the updated touch as said position information while a touch of said detection object continues; and
the control means which sets said virtual keyboard to the second touch sensor.

5. The input apparatus according to claim 1 comprising:
the control means which sets said virtual keyboard with the assumption that said detection object is a predetermined finger.

6. The input apparatus according to claim 1 comprising:
the control means which stores the position relation information on a plurality of fingers for each of users and sets with a format based on said position relation information when said virtual keyboard is set.

7. The input apparatus according to claim 1 comprising:
the control means,
in the case that the touch time of said detection object is recognized to be beyond the predetermined time during the usage of said virtual keyboard and the touch position has made a movement,
moving the position of said virtual keyboard corresponding to a vector of said movement.

8. The input apparatus according to claim 1 comprising:
an acceleration sensor;
the recognition means to recognize the acceleration information which said acceleration sensor has detected; and
the control means which switches to a mode which sets said virtual keyboard based on said acceleration information.

9. The input apparatus according to claim 1 comprising:
an illuminance sensor;
the recognition means which recognizes the illuminance information which said illuminance sensor has detected and
the control means which switches to a mode which sets said virtual keyboard based on said acceleration information.

10. A control method of an input apparatus, which is a control method of an input apparatus of an information processing apparatus having a touch sensor, comprising:
a detection process which detects a touch of the detection object detected by said touch sensor ;
a recognition process which recognizes a position information of said detection object; and
a setting process which sets said virtual keyboard based on said position information.
